# FASCICULE DE BREVET EUROPEEN

(11) **EP 1 520 770 B1**
(45) Date de publication et mention de la délivrance du brevet: **08.04.2009**
(21) Numéro de dépôt: 04292332.6
(22) Date de dépôt: 30.09.2004
(51) Int. Cl.: B62D 25/20, B60R 13/08

(54) **Module de plancher structurel présentant des propriétés de protection acoustique**
Bodenstruktur mit lärmschalleigenschaften
Tructural floor module with sound insulation properties

(30) Priorité: 02.10.2003 FR 0350637
(43) Date de publication de la demande: 06.04.2005
(73) Titulaire: Centre d'Etude et de Recherche pour l'Automobile (CERA), 51100 Reims (FR)
(72) Inventeur: Lemaire, Dominique, 08190 Villiers Devant le Thour (FR)
(74) Mandataire: Sayettat, Julien Christian

(56) Documents cités:
- EP-A- 1 251 062
- EP-B- 1 077 835
- FR-A- 2 622 525
- US-A- 3 087 571
- US-A- 4 461 796

## Description

L'invention concerne un module de plancher structurel, pour véhicule automobile, présentant des propriétés de protection acoustique.

Il est connu de réaliser la structure des planchers de véhicule automobiles à base de tôle et de la revêtir, du côté de l'habitacle, d'un garnissage, usuellement multicouches, présentant des propriétés d'isolation et/ou d'absorption acoustique.

L'isolation acoustique, destinée à réduire l'intensité sonore pénétrant dans l'habitacle, est usuellement traitée par des systèmes de type « masse-ressort », disposés sur la structure de plancher. De tels systèmes sont formés d'un complexe comprenant une couche élastique, telle qu'une mousse ou un feutre, associée à une couche de masse surfacique élevée.

Ces complexes peuvent être recouverts d'un revêtement d'aspect tel qu'une moquette. De par sa nature poreuse, la moquette possède des propriétés d'absorption acoustique permettant de réduire le bruit qui pénètre dans l'habitacle malgré l'isolation apportée.

D'autre part, il est connu de réaliser l'amortissement vibratoire des tôles de plancher des véhicules par dépôt d'une couche d'un matériau amortissant, par exemple à base de bitume (traitement parfois dénommé IFF (Insonorisant en Feuille Fusible)).

Enfin, il est également connu de disposer sous la caisse d'un véhicule automobile un ou plusieurs déflecteurs dont la géométrie est notamment agencée pour améliorer les caractéristiques aérodynamiques du véhicule.

De tels déflecteurs sont usuellement réalisés à base de matière plastique, renforcée ou non, aisément mise en forme à la géométrie attendue.

On le voit, la composition d'un plancher de véhicule automobile s'avère complexe et requiert de multiples étapes de réalisation et d'assemblage.

L'invention a pour but d'apporter une simplification dans la réalisation de tels planchers, en proposant un module de plancher structurel présentant des propriétés de protection acoustique (isolation, amortissement et absorption) et une fonction de déflecteur sous caisse.

A cet effet, l'invention propose un module de plancher de véhicule automobile comprenant, empilés depuis l'habitacle vers l'extérieur du véhicule, les composants suivants :
- une couche poreuse,
- un panneau structurel, à base de matériau synthétique, comprenant une pluralité de cavités ouvertes vers ladite couche poreuse,
- au moins un élément étendu, ledit élément étant élastique et déformable,
- un déflecteur sous caisse.
comme en partie connus du document FR 2 622 525, cet empilement étant caractérisé selon la revendication 1.

Par élément étendu, on entend un élément dont la surface n'est pas négligeable par rapport à celle du module, par opposition notamment à une rondelle ou à un plot.

Un tel agencement permet de combiner en un seul module des fonctions structurelle, de protection acoustique et d'aérodynamisme.

La fonction structurelle est apportée essentiellement par le panneau structurel qui, du fait de sa réalisation à base de matériau synthétique tel qu'un polypropylène, présente l'avantage d'un poids moindre que celui des structures à base de tôle.

Les propriétés mécaniques de ce panneau peuvent être améliorées par incorporation de fibres de renfort dans le matériau synthétique.

La protection acoustique est traitée sur plusieurs plans :
- L'isolation est effectuée par effet masse-ressort résultant de la superposition de l'élément déformable élastique, faisant office de ressort, et du déflecteur, tenant lieu de masse.
- L'absorption dans l'habitacle résulte de la présence de la couche poreuse. En fonction des caractéristiques attendues, cette couche poreuse peut être composée d'une pluralité de sous couches de porosités différentes.

Selon une réalisation, le panneau structurel est sous forme d'une plaque sensiblement plane pourvue d'un réseau de nervures, lesdites nervures étant agencées pour être sensiblement orthogonales à ladite plaque et saillantes vers la couche poreuse, lesdites nervures formant en association avec ladite plaque les cavités ouvertes.

Lesdites cavités permettent, une fois leur ouverture masquée par la couche poreuse, une absorption acoustique optimisée, ceci par réflexions multiples des ondes sonores en leur sein.

Les cavités peuvent être prévues de géométries différentes sur le panneau, ceci de sorte à générer, lorsque la couche poreuse présente une porosité modérée, par exemple de l'ordre de 900 N.s.m⁻³, un phénomène de résonance, chaque cavité résonant à sa fréquence propre, fonction de sa géométrie.

Selon une réalisation, le module est agencé de sorte à permettre une compression de l'élément déformable, au moins localement, une fois le module assemblé.

Un tel agencement peut être obtenu par exemple en prévoyant une épaisseur de l'élément déformable qui soit supérieure à l'espace disponible entre le panneau structurel et le déflecteur. L'élément déformable se trouve ainsi comprimée après assemblage du module.

On réalise ainsi un effet amortissant, combiné à l'effet isolant précédemment décrit, ceci par compression de tout ou partie de l'élément déformable contre le panneau structurel dont on veut amortir les vibrations.

En fonction de l'agencement retenu, le taux de compression de l'élément déformable est plus ou moins important, ce dernier étant ajusté en fonction des caractéristiques respectives d'isolation et d'amortissement attendues.

Il est également possible de jouer sur la masse surfacique du déflecteur pour affiner les caractéristiques de protection acoustique du module, notamment en terme d'isolation.

Afin d'obtenir de bonnes caractéristiques d'absorption acoustique du module, la couche poreuse peut présenter une porosité comprise entre 500 et 1500 N.s.m⁻³.

La couche poreuse peut comprendre une pluralité de sous couches de porosités différentes. L'une de ces couches peut être une moquette d'aspect.

La réalisation du panneau structurel et/ou du déflecteur à base d'un matériau plastique, tel qu'un polypropylène éventuellement chargé de fibres de renfort, permet d'intégrer aisément, notamment dans le cas d'un moulage, des éléments fonctionnels tels que des moyens de fixation destinés à permettre l'assemblage de différents composants du module entre eux et/ou du module lui même sur la structure du véhicule.

Ces moyens de fixation peuvent par exemple se présenter sous la forme d'orifices ou de clips destinés à être associés à des moyens complémentaires prévus par ailleurs.

L'élément déformable peut comprendre un feutre, une mousse souple ou un élastomère, matériaux présentant l'élasticité requise afin de conférer les propriétés acoustiques attendues.

Il peut présenter des dimensions sensiblement équivalentes à celles du plancher, de sorte à former une couche.

En variante, le module peut comprendre plusieurs éléments déformables, disposés contigus ou disjoints, et ce sensiblement dans un même plan. Les éléments peuvent être à base de matériaux et/ou de géométries différents. Une telle réalisation permet de conférer un traitement acoustique spécifique à chacune des zones du module.

D'autres particularités et avantages de l'invention apparaîtront dans la description qui suit, faite en référence aux figures jointes dans lesquelles :
- La figure 1 schématise une vue partielle éclatée des composants d'un module selon l'invention,
- La figure 2 représente une coupe schématique d'un module selon l'invention une fois monté dans son environnement.

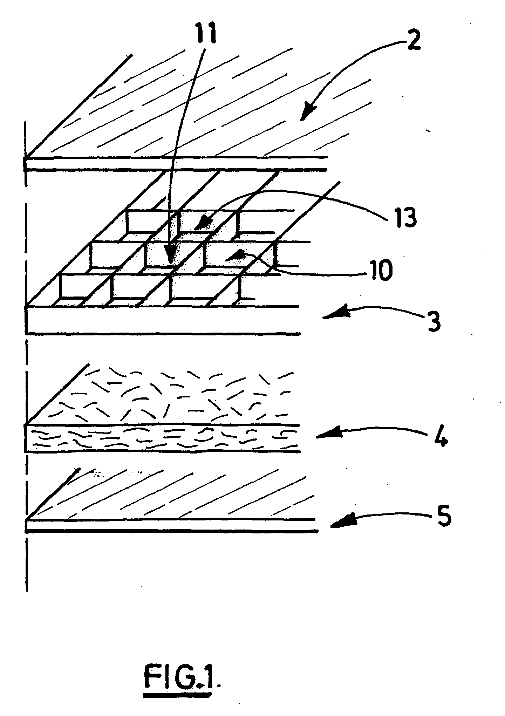

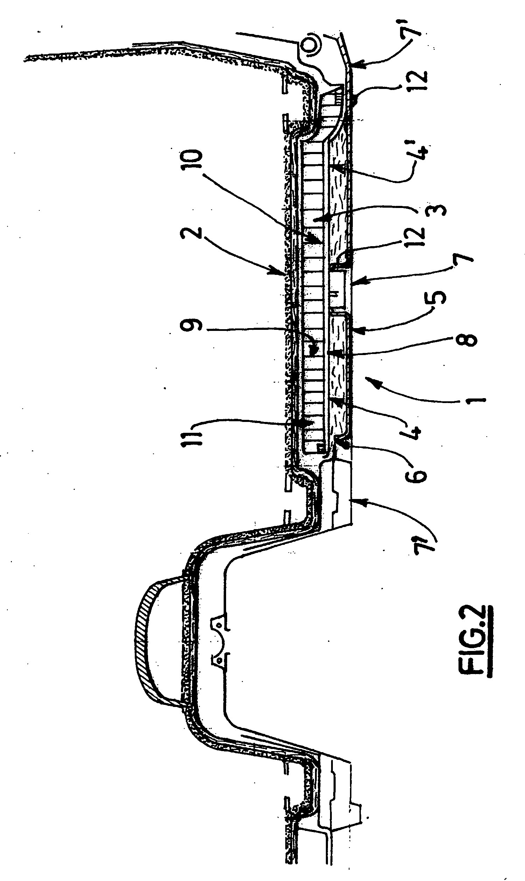

En référence aux figures 1 et 2 on décrit à présent un module selon l'invention.

Le module 1 comprend une couche poreuse 2, formée ici par le revêtement de sol du véhicule, par exemple une moquette poreuse pourvue d'une sous couche poreuse elle aussi.

Dans cette réalisation, la couche poreuse 2 s'étend au delà du module 1 dans la mesure où elle recouvre des parties du plancher non formées par ledit module.

La couche poreuse 2 couvre un panneau structurel 3, ledit panneau étant ici sous forme d'une plaque 8 pourvue d'un réseau de nervures 9 orthogonales à ladite plaque et saillantes vers la couche poreuse 2.

L'agencement des nervures 9, sous forme de croisillons 13, est réalisé de sorte à former, en association avec la plaque 8, des cavités 10 présentant une ouverture 11 orientée vers la couche poreuse 2 qui recouvre lesdites ouvertures.

Deux éléments déformables 4, 4' sont disposés entre la plaque 8 et un déflecteur 5 comprenant une cornière 12 en U, disposée en appui sur un longeron 7, qui réalise une séparation entre les éléments 4 et 4'.

Afin d'assurer une fonction d'amortissement acoustique, les éléments déformables 4 et 4' peuvent être disposés sous forme comprimée entre la plaque 8 et le déflecteur 5.

Le panneau structurel 3 et/ou le déflecteur 5, lorsqu'ils sont moulés, peuvent intégrer des moyens de fixation 6 directement issus du moulage, ici des orifices permettant le passage de vis 12 assurant la fixation du module 1 sur la structure de caisse 7, 7'.

Dans le cas représenté sur la figure 2, la mise en place du module 1 sur le véhicule s'effectue en deux étapes : d'abord le montage sur la structure sous caisse 7, 7' d'un sous module comprenant le panneau structurel 2, le (les) élément(s) déformable(s) 4,4' et le déflecteur 5, à l'exception de la couche poreuse; puis le recouvrement de ce sous module par la couche poreuse 2.

## Revendications

1. Module de plancher (1) de véhicule automobile, présentant des propriétés de protection accoustique, comprenant, empilés depuis l'habitacle vers l'extérieur du véhicule, les composants suivants :
- une couche poreuse (2) d'absorption ;
- un panneau structurel (3), à base de matériau synthétique, comprenant une pluralité de cavités (10) présentant une ouverture (11) orientée vers ladite couche poreuse qui recouvre lesdites ouvertures ;
- au moins un élément (4) étendu faisant office de ressort ledit élément étant déformable et élastique de sorte à pouvoir être comprimé ;
- un déflecteur sous caisse (5) tenant lieu de masse, la protection acoustique étant effectuée par effet masse-ressort du fait de la superposition dudit élément et dudit déflecteur.

2. Module selon la revendication 1, **caractérisé en ce que** le panneau structurel (2) est sous forme d'une plaque (8) pourvue d'un réseau de nervures (9), lesdites nervures étant agencées pour être sensiblement orthogonales à ladite plaque et saillantes vers la couche poreuse (2), lesdites nervures formant en association avec ladite plaque les cavités (10).

3. Module selon l'une des revendications 1 ou 2, **caractérisé en ce que** des cavités (10) de géométries différentes sont prévues sur le panneau (3).

4. Module selon l'une quelconque des revendications 1 à 3, **caractérisé en ce que** l'élément déformable (4) est comprimé, au moins localement, entre le panneau (3) et le déflecteur (5).

5. Module selon l'une quelconque des revendications 1 à 4, **caractérisé en ce que** la couche poreuse (2) a une porosité comprise entre 500 et 1500 N.s.m⁻³.

6. Module selon l'une quelconque des revendications 1 à 5, **caractérisé en ce que** le panneau structurel (3) et/ou le déflecteur (5) intègre des organes fonctionnels tels que des moyens de fixation (6).

7. Module selon l'une quelconque des revendications 1 à 6, **caractérisé en ce que** l'élément déformable (4) comprend un feutre, une mousse souple ou un élastomère.

8. Module selon l'une quelconques des revendications 1 à 7, **caractérisé en ce qu'**il comprend une pluralité d'éléments déformables (4) disposés sensiblement dans un même plan.

## Claims

1. Motor vehicle floor unit (1), with noise protection properties comprising, stacked from the vehicle passenger compartment outwards, the following components:
- a porous absorption layer (2);
- a synthetic material based structural panel (3), comprising a plurality of cavities (10) with an opening (11) orientated towards said porous layer which covers said openings;
- at least one extended element (4) acting as a spring, said element being deformable and resilient so as to be able to be compressed;
- an under-floor baffle plate (5) in lieu of a mass, the noise protection being provided by mass-spring effect due to said element and said baffle plate being laid one on the other.

2. Unit as claimed in claim 1, **characterised in that** the structural panel (2) is in the form of a plate (8) provided with a network of ribs (9), said ribs being arranged so as to be substantially orthogonal to said plate and in projection towards the porous layer (2), said ribs forming in association with said plate the cavities (10).

3. Unit as claimed in one of claims 1 or 2, **characterised in that** cavities (10) of different geometries are provided on the panel (3).

4. Unit as claimed in any one of claims 1 to 3, **characterised in that** the deformable element (4) is compressed, at least locally, between the panel (3) and the baffle plate (5).

5. Unit as claimed in any one of claims 1 to 4, **characterised in that** the porous layer (2) has a porosity level of between 500 and 1,500 Nsm⁻³.

6. Unit as claimed in any one of claims 1 to 5, **characterised in that** the structural panel (3) and/or the baffle plate (5) includes functional parts such as fastening means (6).

7. Unit as claimed in any one of claims 1 to 6, **characterised in that** the deformable element (4) comprises a felt, a flexible foam or an elastomer.

8. Unit as claimed in any one of claims 1 to 7, **characterised in that** it comprises a plurality of deformable elements (4) placed substantially in one and the same plane.

## Patentansprüche

1. Fußbodenmodul (1) für Kraftfahrzeuge, das Geräuschschutzeigenschaften aufweist und vom Fahrgastraum zum Äußern des Fahrzeugs hin gestapelt die folgenden Bestandteile umfasst:
- eine poröse Absorptionsschicht (2);
- eine Strukturplatte (3), die auf einem Kunststoff basiert, der eine Vielzahl von Hohlräumen (10) umfasst, die eine Öffnung (11) aufweisen, die zu der porösen Schicht hin ausgerichtet ist, welche die Öffnungen abdeckt;
- mindestens ein erweitertes Element (4), das als Federung dient, wobei das Element verformbar und elastisch ist, so dass es zusammendrückbar ist;
- eine Ablenkplatte unter der Karosserie (5), die als Masse dient, wobei der Geräuschschutz durch einen Masse-Federungs-Effekt durch die Überlagerung des Elements und der Ablenkplatte erfolgt.

2. Modul nach Anspruch 1, **dadurch gekennzeichnet, dass** die Strukturplatte (2) in Form einer Platte (8) vorliegt, die mit einem Netz von Rippen (9) versehen ist, wobei die Rippen angeordnet sind, um im Wesentlichen orthogonal zu der Platte zu sein und in Richtung auf die poröse Schicht (2) vorzuspringen, wobei die Rippen zusammen mit der Platte die Hohlräume (10) bilden.

3. Modul nach einem der Ansprüche 1 oder 2, **dadurch gekennzeichnet, dass** Hohlräume (10) mit verschiedenen Geometrien auf der Platte (3) vorgesehen sind.

4. Modul nach einem der Ansprüche 1 bis 3, **dadurch gekennzeichnet, dass** das verformbare Element (4) zwischen der Platte (3) und der Ablenkplatte (5) zumindest stellenweise zusammengedrückt wird.

5. Modul nach einem der Ansprüche 1 bis 4, **dadurch gekennzeichnet, dass** die poröse Schicht (2) eine Porosität aufweist, die zwischen 500 und 1500 N.s.m⁻³ liegt.

6. Modul nach einem der Ansprüche 1 bis 5, **dadurch gekennzeichnet, dass** die Strukturplatte (3) und/oder die Ablenkplatte (5) Funktionsorgane integriert bzw. integrieren, wie etwa Befestigungsmittel (6).

7. Modul nach einem der Ansprüche 1 bis 6, **dadurch gekennzeichnet, dass** das verformbare Element (4) einen Filz, einen Weichschaum oder ein Elastomer umfasst.

8. Modul nach einem der Ansprüche 1 bis 7, **dadurch gekennzeichnet, dass** es eine Vielzahl von verformbaren Elementen (4) umfasst, die im Wesentlichen in einer selben Ebene angeordnet sind.
